(19) Europäisches Patentamt / European Patent Office / Office européen des brevets

(11) **EP 2 626 603 B1**

(12) **EUROPEAN PATENT SPECIFICATION**

(45) Date of publication and mention
of the grant of the patent:
**01.06.2016 Bulletin 2016/22**

(51) Int Cl.:
***F16J 15/32*** *(2006.01)*

(21) Application number: **13153447.1**

(22) Date of filing: **31.01.2013**

(54) **Leaf seal**

Lamellendichtung

Joint plat

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.02.2012 GB 201202104**

(43) Date of publication of application:
**14.08.2013 Bulletin 2013/33**

(73) Proprietor: **Rolls-Royce plc
London SW1E 6AT (GB)**

(72) Inventor: **Franceschini, Gervas
Derby, Derbyshire DE23 1XP (GB)**

(74) Representative: **Rolls-Royce plc
Intellectual Property Dept SinA-48
PO Box 31
Derby DE24 8BJ (GB)**

(56) References cited:
**EP-A1- 2 105 640      EP-A2- 1 231 416
JP-A- 2002 013 647**

## Description

Field of the Invention

The present invention relates to a leaf seal for effecting a seal between two coaxial, relatively rotating components.

Background of the Invention

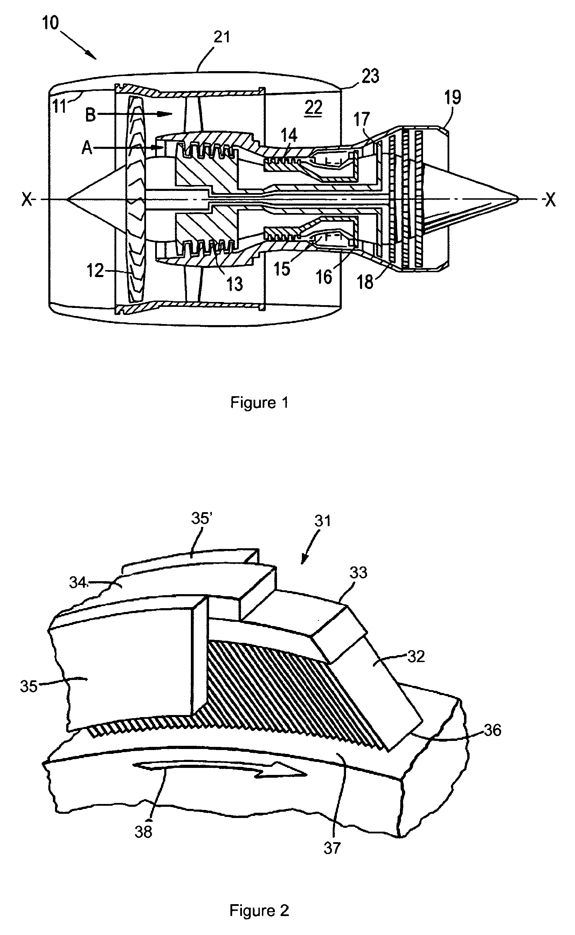

With reference to Figure 1, a ducted fan gas turbine engine generally indicated at 10 has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

Leaf seals are formed from sections of leaf material appropriately presented in order to create a seal surface from juxtaposed leaf edges of respective leaves in an assembly. Typically the leaves are arranged circumferentially about a rotating shaft in order to present the leaf edges and therefore the seal surface towards that shaft in order to provide a seal barrier. Typically, spacer members are provided between each leaf in order to correctly arrange the seal elements for presentation of the leaf edges and therefore the seal surface. These spacers may be independent components or integrally formed with each leaf. The leaf edges and so the seal surface effectively floats upwards and downwards relative to a rotating surface.

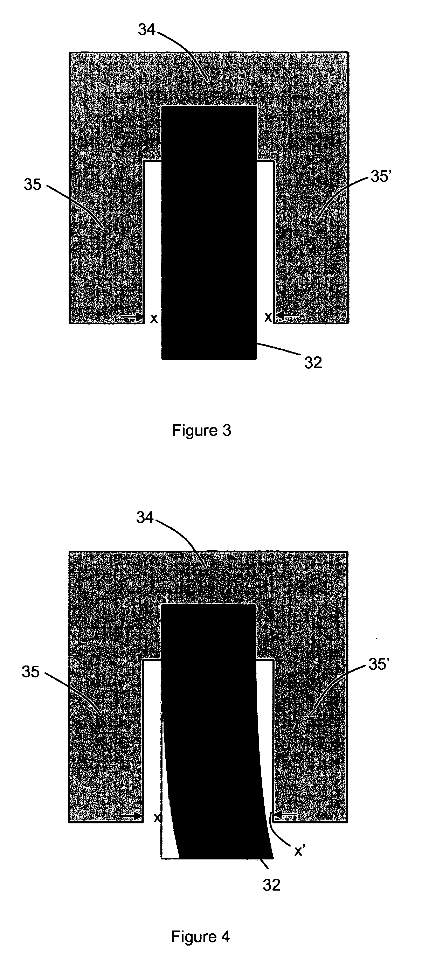

In a gas turbine engine, leaf seals may be used to form a seal between a static component and a rotating component, between two relatively rotating components, or even between two static components in order to maintain a relatively high pressure on one side of the seal and relatively low pressure on the other. Figure 2 shows schematically, for example, a cut-away perspective view of a portion of a leaf seal assembly 31 comprising a pack of leaves 32 extending from spacer elements 33 secured in a housing comprising a backing ring 34 with upstream 35 and downstream 35' rigid coverplates. Figure 3 shows schematically a longitudinal cross-section through the leaf pack and housing. The leaves 32 present leaf edges 36 towards a surface 37 of a rotating component generally rotating in the direction depicted by arrowhead 38. The leaves 32, and in particular the leaf edges 36 of the leaves 32 act against the surface 37 in order to create a seal across the assembly 31. Each leaf 32 is generally compliant in order to adjust with rotation of the surface 11 to ensure that a good sealing effect is created. The spacers 33 are generally required in order to ensure that flexibility is available to appropriately present the leaves 32 towards the surface 37 which, as illustrated, is generally with an inclined angle between them.

Leaf seals such as those shown in Figures 2 and 3 rely on their coverplates 35, 35' to block the bulk of the flow area through the leaf pack, flow area being strongly linked to seal leakage performance. The coverplates, being immediately upstream and downstream of the leaf pack, allow the direct flow area through the leaf pack to be reduced, as the coverplates cover much of the interleaf gaps, which are generally largest close to the leaf root. Reducing the coverplate to leaf pack gap x, x' further decreases the seal leakage, as it reduces the amount of air that can flow radially outwards or inwards in the space between each coverplate and the adjacent leaf pack. Hence in order to minimise leakage it is conventionally desirable to minimise the coverplate to leaf pack gaps.

However, such coverplates also influence the blow-up and blow-down performance of the seal (as discussed, for example in H. Nakane et al., The Development of High-Performance Leaf Seals, Trans. ASME, Vol. 126, April 2004, pp. 342-350). To control blow-down and blow-up, the ratio of the front coverplate to leaf pack distance and the rear leaf pack to coverplate distance needs to be controlled accurately. Excessive blow-down can lead to accelerated leaf wear and excessive blow-up leads to increased leakage.

With low differential pressures applied across the seal the blow-down is proportional to the differential pressure applied across the seal (as discussed, for example in G Franceschini et al., Improved Understanding of Blow-down in Filament Seals, Journal of Turbomachinery, 132(4), October 2010, p.041004 TURBO-09-1028). When substantial differential pressures are applied across the leaf seal, the leaves are deflected axially by the pressure, as shown in Figure 4. Thus the front gap x opens up and the rear gap x' closes up, most significantly at the edges of the coverplates proximal the leaf edges, leading to an increasingly severe blow-down configuration (the blow-down increases much more than by the differential pressure alone). As a result, at the very pressures where large rotor contact forces are generally not desirable, the leaf seal imparts a large torque due to the high differential pressure across the leaf seal which is made significantly worse by the elevated blow-down configuration of the coverplate to leaf pack gaps. This significantly limits the maximum differential pressure that the leaf seal can be subjected to.

US 2003/0068224 proposes a leaf seal having a high pressure side plate which is arranged at a high pressure side and a low pressure side plate which is arranged at a low pressure side so as to hold a leaf pack therebetween. A flexible plate is arranged between the leaf pack and the high pressure side plate, and is fixed to the pack so that it does not separate therefrom.

US 2008/0265514 proposes a leaf seal having a leaf pack which is located in the cavity between a rigid front wall and a rigid back wall. The front and back walls are slidably movable so that the distance between the walls can be varied to change the widths of a gap between the front wall and the leaf pack and of a gap between the back wall and the leaf pack.

EP1231416 describes a leaf seal according to the preamble of claim 1.

Summary of the Invention

An aim of the present invention is to provide performance improvements in leaf seals.

The present invention provides a leaf seal according to claim 1 and a method of controlling blow-up or blow-down forces in accordance with claim 3.

Advantageously, by having an upstream and/or a downstream coverplate which flexibly deflects under differential pressure, the width of the respective axial gap can be controlled in operation, e.g. to reduce or eliminate blow-down and hence to reduce or eliminate torque.

For example, in a case of zero clearance at rest between the leaf edges and the other component, there is zero contact load between the leaf edges and the other component. However, for an axially stiff pack and axially stiff coverplates, the blow-down would generally increase linearly with differential pressure. Therefore, to reduce torque, it can be desirable for the downstream coverplate to flex open slightly (i.e. deflect to increase the respective axial gap) with applied differential pressure relative to the pack and/or the upstream coverplate to flex closed slightly (i.e. deflect to decrease the respective axial gap) with applied differential pressure.

In a case of positive clearance at rest between the leaf edges and the other component, again there is zero contact load between the leaf edges and the other component. However here it can be desirable to induce a small amount of blow-down to close the clearance. Thus, compared to the zero clearance case, the downstream coverplate may not need to flex open as much as with applied differential pressure and/or the upstream coverplate may not need to flex closed as much with applied differential pressure.

In a case of contact load at rest between the leaf edges and the other component, it is generally desirable to induce blow-up to offset the blow-down that typically occurs with increasing differential pressure. In this way, the loading between the leaf edges and the other component can be reduced or eliminated as the pressure increases. This can be achieved by the downstream coverplate opening more than for the equivalent zero clearance case with applied differential pressure and/or the upstream coverplate closing more than for the equivalent zero clearance case with applied differential pressure.

Optional features will now be set out.

Preferably, the or each pack is mountable to one of the components such that the leaf edges of that pack are presented for wiping contact with the other component. The components can be a rotor shaft and a casing for the shaft. Typically, the or each pack is mounted to the radially outer component.

Each coverplate typically extends radially from a root distal the leaf edges of the adjacent pack to an edge proximal the leaf edges of the adjacent pack.

Preferably, the ratio ($h^4/t^3$) of either or each coverplate is equal to or greater than 5, and more preferably equal to or greater than 10 or 20, where h is the radial distance in metres from the distal root to the proximal edge of the coverplate, and t is the thickness in metres of the coverplate. Such a value for the ratio can allow the or each coverplate to be sufficiently flexible to respond to pressure and deflect axially, e.g. so that either or both of the upstream and downstream gaps can retain its initial unpressurized width, or so that either or both of the upstream and downstream gaps can close or open slightly in order to modify the blow-down with changing differential pressure.

A single pack, or either or both of a most-upstream and a most-downstream pack may be configured to deflect axially under said differential pressures, and the upstream and/or the downstream coverplate may be flexible to axially deflect under said differential pressures such that, at the maximum differential pressure experienced in operation, the width of the respective axial gap at the coverplate edge proximal the leaf edges of the adjacent pack may be within ±20%, and preferably within ±10%, of the width of the gap at that position at zero differential pressure.

At the maximum differential pressure experienced in operation, the single pack, or the most-upstream pack may deflect axially by an amount that, relative to the undeflected position of the pack, moves the upstream side of the pack in the downstream direction by an amount that, at its leaf edges, is equivalent to at least about 15%, and preferably at least about 30%, of the width of the upstream gap at the coverplate edge proximal the leaf edges at zero differential pressure. Likewise, at the maximum differential pressure experienced in operation, the single pack or the most-downstream pack may deflect axially by an amount that, relative to the undeflected position of the pack, moves the downstream side of the pack in the downstream direction by an amount that, at its leaf edges, is equivalent to at least about 15%, and preferably at least about 30%, of the width of the downstream gap at the coverplate edge proximal the leaf edges at zero differential pressure.

The leaf seal can be used, for example, in gas and steam turbines, and jet engines. However, it may also be used in other applications, e.g. where sealing between a high and low pressure region is required along a shaft.

Further optional features will now be set out.

The single pack, or either or both of the most-upstream and the most-downstream packs may deflect axially under the differential pressure such that, at the maximum differential pressure, the width of the respective axial gap is within $\pm 20\%$, and preferably within $\pm 10\%$, of the width of the gap at the coverplate edge proximal the leaf edges at zero differential pressure. Preferably, the respective axial gap at the coverplate edge proximal the leaf edges is maintained substantially unchanged over the range of differential pressures experienced in operation. Alternatively, the amount of blow-down may be increased by the axial deflection of the or each coverplate, e.g. to apply a retarding torque on the other component. According to another option, however, the amount of blow-up may be increased by the axial deflection of the or each coverplate.

Further optional features of the invention are set out below.

Brief Description of the Drawings

Embodiments of the invention will now be described by way of example with reference to the accompanying drawings in which:

Figure 1 shows a schematic longitudinal cross-section through a gas turbine engine;

Figure 2 shows schematically a cut-away perspective view of a portion of a leaf seal assembly;

Figure 3 shows schematically a longitudinal cross-section through the leaf pack and housing of the seal assembly of Figure 2;

Figure 4 shows the longitudinal cross-section of Figure 3 when a substantial differential pressure is applied across the leaf seal;

Figures 5(a) to (c) show schematically respective longitudinal cross-sections through a leaf pack and housing of seal assemblies of first to third embodiments of the present invention;

Figure 6 shows schematically a longitudinal cross-section through a leaf pack and housing to demonstrate: (a) the overall axial pressure across the pack, (b) the pressure across the front coverplate, (c) the pressure across the leaf pack, and (d) the pressure across the rear coverplate;

Figures 7(a) to (c) show respective schematic longitudinal cross-sections corresponding to the first to third embodiments of Figures 5(a) to (c) to demonstrate the types of deflection produced by the flexible coverplates of those embodiments; and

Figures 8(a) to (e) show schematically respective options for shaping a front coverplate in order to produce coverplate flexibility.

Detailed Description and Further Optional Features of the invention

Leaf seal assemblies according to the present invention may have coverplates which, by their flexibility, axially deflect under the application of the pressure to provide control of the axial gap between the coverplate and the adjacent leaf pack. For example, it is possible to match the axial deflection of the coverplate with the axial deflection of the leaf pack to ensure that the gap between the cover plate and leaf pack does not substantially depart from the nominal gap when a pressure condition is applied.

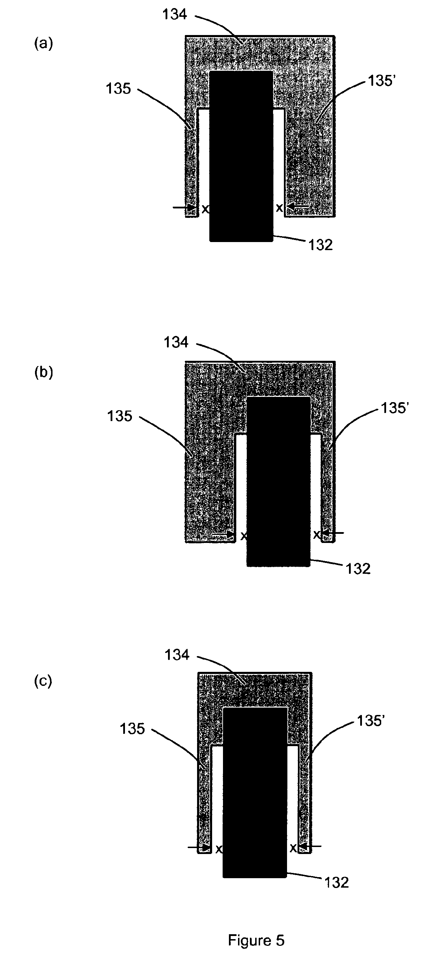

Figures 5(a) to (c) show schematically longitudinal cross-sections through the leaf pack and housing of leaf seal assemblies of respectively first to third embodiments of the present invention for sealing between an outer casing and a rotor shaft. Each leaf seal has a pack of leaves 132 secured in a housing comprising a backing ring 134 with upstream 135 and downstream 135' coverplates. In Figure 5(a), the front cover plate 135 is thinned so that it is flexible and axially deflectable, while the thicker rear coverplate 135' is effectively rigid and undeflectable. In Figure 5(b), the rear cover plate 135' is flexible, and the front coverplate 135 is rigid. In Figure 5(c), both the front 135 and rear' coverplates are flexible. The third embodiment of Figure 5(c) is particularly useful for exercising control of both the leaf to coverplate front gap x and the corresponding rear gap x' during pressurization.

A target for the axial deflection can be principally to keep the gap between the cover plate and the leaf pack constant with the application of differential pressure. However, there may be reasons why a different objective should be set. One example, due to thermal mismatch in rotor to casing radial gap, more blow-down may be required at low differential pressure than at high differential pressure so that a rear coverplate gap x' which opens slightly with pressure compared to the front gap x can give a slight blow-up configuration as the pressure difference across the leaf seal is increased. Hence, by appropriate adjustment of coverplate flexibility, it is possible to fit the behaviour of the leaf seal to the specific thermal and movement cycle in an engine. Ultimately an aim can be to "tune" the leaf seal to an engine cycle by ensuring that the seal inner bore rests close to the shaft at a number of different operating points in the cycle.

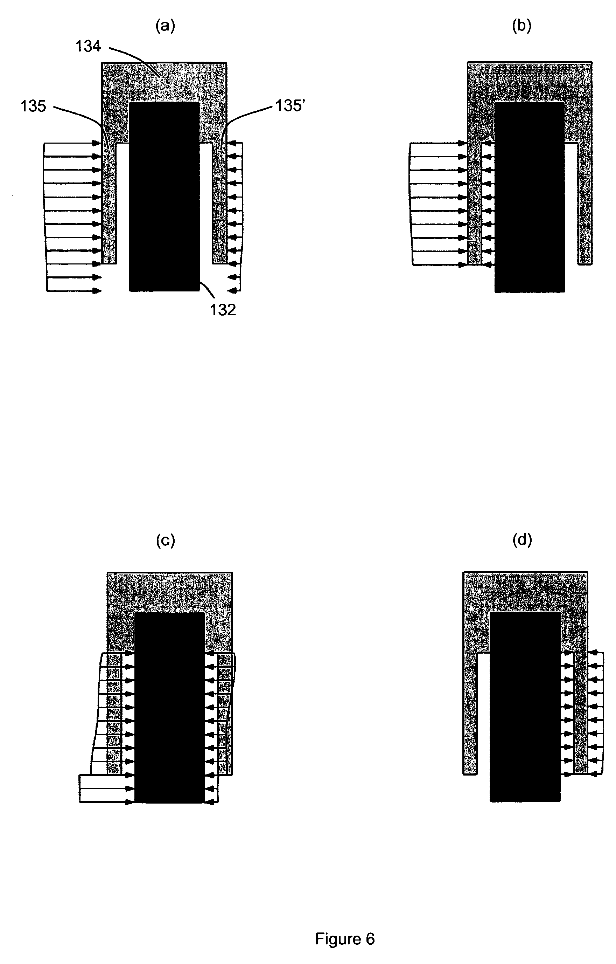

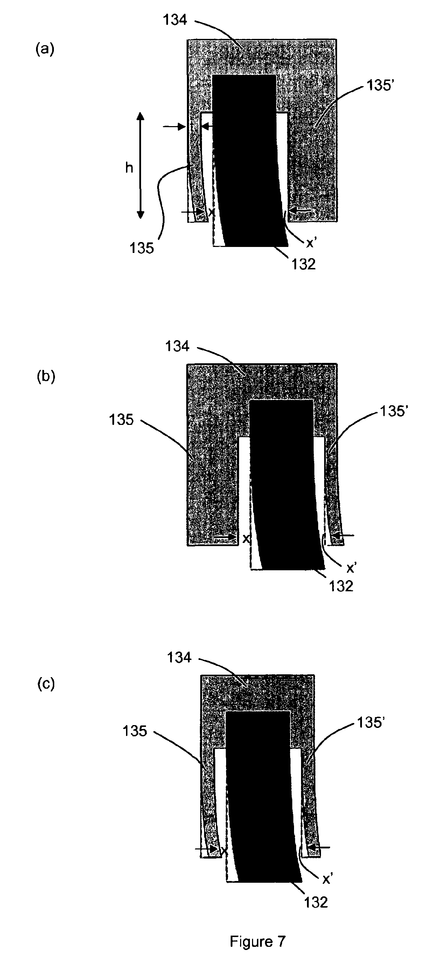

Figure 6 shows schematically a longitudinal cross-section through a leaf pack and housing to demonstrate: (a) the overall axial pressure across the pack, (b) the pressure across the front coverplate 135, (c) the pressure across the leaf pack, and (d) the pressure across the rear coverplate 135'. The pressure across the leaf pack produces leaf deflection of the type shown in Figure 4. The pressures across the front and rear coverplates can be used to determine the coverplate configuration and degree of flexibility required to produce a given axial deflection of the plate. Thus Figures 7(a) to (c) show respective schematic longitudinal cross-sections corresponding to the first to third embodiments of Figures 5(a) to (c) to demonstrate the types of deflection produced by the flexible coverplates of those embodiments. More particularly, with an axially flexible front coverplate 135, as shown in Figure 7(a), the pressure deflects both the front plate and the leaf pack so that the rear gap x' closes but the front gap x does not open, whereby the blow-down increases with pressure, but not as much as with the rigid front and rear coverplates of Figure 4. With an axially flexible rear coverplate 135', as shown in Figure 7(b), the pressure deflects the rear plate and the leaf pack so that the front gap x opens but the rear gap x' does not, leading again to a limited blow-down increase with increasing pressure. With both the front 135 and rear 135' coverplates being axially flexible to a similar level as the leaf pack, as shown in Figure 7(c), the front x and rear x' gaps remain substantially unchanged with changing pressure such that blow-down can be significantly reduced or eliminated. Thus, for example, when an aim is to reduce or eliminate blow-down and blow-up, the widths of the axial gaps x at the coverplate edge proximal the leaf edges of the adjacent pack may be maintained to within ±20% of the widths of the gaps at that position at zero differential pressure.

As can be seen in Figures 7(a) to (c), a particular advantage of a flexible coverplate is that, on a longitudinal cross-section, it can adopt a curved deflected shape that matches the curved deflected shape of the facing side of the pack. This facilitates keeping the width of the respective gap constant over the entire radial extent of the gap.

If, by suitable configuration of the flexible rear coverplate 135', the rear gap x' is made to increase relative to the front gap x, then the leaf seal can exhibit blow-up with increasing pressure, which may be beneficial for some seals.

The deflection δ of a coverplate is given by:

$$\delta = K \cdot \frac{h^4 \cdot \Delta P}{E \cdot t^3}$$

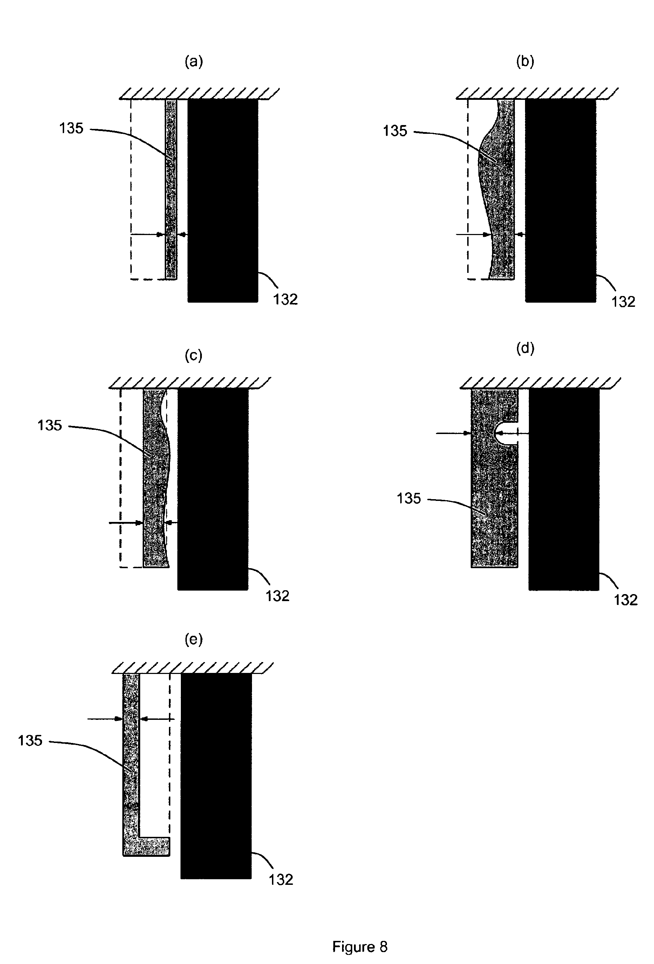

where h is the radial distance from the root to the edge of the coverplate (see Figure 7(a)), ΔP is the differential pressure across the coverplate, E is the Young modulus of the material of the coverplate, t is the coverplate thickness (also see Figure 7(a)), and K is a factor which typically for a leaf seal coverplate is around 1.4. To provide adequate coverplate flexibility, the dimensional ratio ($h^4/t^3$) is typically equal to or greater than 5, and preferably equal to or greater than 10 or 20, h and t being values in metres. Coverplate flexibility can be achieved by modification of the coverplate cross-section. Thus, for example, as shown in Figure 8(a), the thickness of the coverplate 135 can be reduced relative to a conventional rigid coverplate (indicated by dotted lines). However, additionally or alternatively, the profile of the coverplate can be changed, e.g. for matching the gap at different radial stations, as shown in Figures 8(b) and (c). Another option (shown in Figure 8(d)) is to thin a neck portion of the coverplate proximate the backing ring, which can increase the amount of coverplate deflection without excessive thinning of the distal parts of the coverplate. Yet another option (shown in Figure 8(e)) is to provide a relatively thin and hence flexible coverplate, but to provide a projection 137 directed towards the pack of leaves 132 at the edge of the coverplate proximal the leaf edges in order to reduce the gap at this position. Such shaping options facilitate precise control of the deformation of the coverplate under pressure load, and therefore control of the variation of the gap between the seal pack and the coverplate at different radial positions, allowing fine tuning of seal leakage and blow-down.

By matching coverplate flexibility to the axial deflection of the leaf pack, a seal can be run at higher pressure differentials without excessive blow-down causing high contact loads and hence elevated torques. Additionally or alternatively, the leaf seal blow-down behaviour with pressure can be altered so that a desirable blow-down or blow-up can be achieved at various pressures. For example, the leaf seal can thus be better matched to follow an engine cycle. A further advantage of adopting flexible coverplates is that the seal can be made more lightweight, which can be particularly beneficial in aerospace applications.

Although blow-down is generally seen as undesirable, control of the gaps between coverplates and leaf pack can be used to deliberately produce blow-down when the pressure differential reaches a predetermined level, e.g. associated with engine overspeed. The leaf pack can then function as a mechanical brake, with the blow-down urging the leaves heavily against the shaft to exert a significant retarding torque on the shaft. The air flow through the leaves can function as a cooling flow for the frictional heating thus-produced, allowing the brake to operate continuously. In this application, suitable control of the gaps may be achievable even with rigid coverplates.

While the invention has been described in conjunction with the exemplary embodiments described above, many equivalent modifications and variations will be apparent to those skilled in the art when given this disclosure. For example, in the above embodiments, the leaf packs are mounted to a radially outer housing and their leaves extend towards an inner rotor. However, in other embodiments, the packs could be mounted to a radially inner component and their leaves extend towards an outer component. Further, in the above embodiments, the seal assemblies have single leaf packs, but in other embodiments each assembly could have a plurality of axially arranged packs, the coverplates being spaced from respectively the most-upstream and the most-downstream of the annular packs by respective axial gaps. Accordingly, the exemplary embodiments of the invention set forth above are considered to be illustrative and not limiting. Various changes to the described embodiments may be made without departing from the scope of the invention as defined by the appended claims.

## Claims

1. A leaf seal for effecting a seal between two, coaxial, relatively rotating components, the leaf seal having an annular pack of stacked leaves (132) or a plurality of axially arranged annular packs of stacked leaves, the or each pack being mountable to one of the components with its leaves extending towards the other component such that the leaf edges of the pack are presented for wiping contact with the other component;

   the leaf seal further having upstream (135) and downstream (135') coverplates at the respective axial ends of the seal, each coverplate being spaced from the adjacent annular pack by a respective axial gap (x, x'), and, when viewed in the axial direction, each coverplate covering at least a portion of the radial extent of the adjacent pack;
   **characterised in that** the upstream and/or the downstream coverplate is flexible to axially deflect under differential pressures which the seal experiences in operation.

2. A leaf seal according to claim 1, wherein each coverplate extends radially from a root distal the leaf edges of the pack to an edge proximal the leaf edges of the pack, and the ratio ($h^4/t^3$) of either or each coverplate is equal to or greater than 5, where h is the radial distance in metres from the distal root to the proximal edge of the coverplate, and t is the thickness in metres of the coverplate.

3. A method of controlling blow-down or blow-up in a leaf seal, the method including the steps of:

   providing a leaf seal according to claim 1 or 2; and
   operating the seal at differential pressures such that the or each flexible coverplate deflects axially to control the width of the respective axial gap and thereby controls the amount of blow-down or blow-up of the adjacent pack.

## Patentansprüche

1. Blattdichtung zum Bewirken einer Dichtung zwischen zwei koaxialen, sich im Verhältnis zueinander drehenden Komponenten, wobei die Blattdichtung eine ringförmige Anordnung gestapelter Blätter (132) oder einer Mehrzahl axial angeordneter Anordnungen gestapelter Blätter aufweist, wobei die oder jede Anordnung an einer der Komponenten angebracht werden kann, wobei sich deren Blätter zu der anderen Komponente erstrecken, so dass die Blattkanten der Anordnung für einen wischenden Kontakt mit der anderen Komponente präsentiert werden;

   wobei die Blattdichtung ferner stromaufwärts (135) und stromabwärts (135') liegende Abdeckplatten an den entsprechenden axialen Enden der Dichtung aufweist, wobei jede Abdeckplatte durch einen entsprechenden axialen Spalt (x, x') zu der benachbarten ringförmigen Anordnung mit Abstand angeordnet ist, und wobei bei einer Betrachtung in axialer Richtung jede Abdeckplatte wenigstens einen Teil der radialen Erstreckung der benachbarten Anordnung abdeckt;
   **dadurch gekennzeichnet, dass** die stromaufwärts liegende und/oder die stromabwärts liegende Abdeckplatte flexibel ist, so dass sie unter unterschiedlichen Druckwerten, welchen die Dichtung im Einsatz ausgesetzt ist, axial abgelenkt wird.

2. Blattdichtung nach Anspruch 1, wobei sich jede Abdeckplatte radial erstreckt von einer Wurzel, die distal zu den Blattkanten der Anordnung angeordnet ist, zu einer Kante, die proximal ist zu den Blattkanten der Anordnung, und wobei das Verhältnis ($h^4/t^3$) einer oder jeder Abdeckplatte größer oder gleich 5 ist, wobei h der radiale Abstand in Metern von der distalen Wurzel zu der proximalen Kante der Abdeckplatte, und wobei t die Dicke der Abdeckplatte in Metern ist.

3. Verfahren zur Regelung des Blow-Down- und Blow-Up-Effekts in einer Blattdichtung, wobei das Verfahren die folgenden Schritte aufweist:

   Bereitstellen einer Blattdichtung nach Anspruch 1 oder 2; und

Betreiben der Dichtung mit unterschiedlichen Druckwerten, so dass die jeder jede flexible Abdeckplatte axial abgelenkt wird, um die Breite des entsprechenden axialen Spalts zu regeln, und wobei dadurch das Ausmaß des Blow-Down- und Blow-Up-Effekts der benachbarten Anordnung geregelt wird.

**Revendications**

1. Joint plat pour assurer l'étanchéité entre deux composants coaxiaux en rotation relative, le joint plat ayant une garniture d'étanchéité annulaire de feuilles empilées (132) ou une pluralité de garnitures d'étanchéité annulaires disposées axialement de feuilles empilées, la ou chaque garniture d'étanchéité étant montable sur l'un des composants avec ses feuilles s'étendant vers l'autre composant de sorte que les bords de la feuille de la garniture d'étanchéité soient présentés pour un contact glissant avec l'autre composant ;
le joint plat ayant en outre des plaques de couverture en amont (135) et en aval (135') aux extrémités axiales respectives du joint, chaque plaque de couverture étant espacée de la garniture d'étanchéité annulaire adjacente par un espace axial respectif (x, x'), et, vu dans le sens axial, chaque plaque de couverture couvrant au moins une partie de l'étendue radiale de la garniture d'étanchéité adjacente ;
**caractérisé en ce que** la plate de couverture en amont et/ou en aval est flexible pour dévier axialement sous les pressions différentielles subies par le joint en fonctionnement.

2. Joint plat selon la revendication 1, chaque plaque de couverture s'étendant radialement d'une racine distale des bords de la feuille de la garniture d'étanchéité vers un bord proximal des bords de feuille de la garniture d'étanchéité, et le rapport $(h^4/t^3)$ d'une ou des deux plaques de couverture étant égal ou supérieur à 5, où h est la distance radiale en mètres de la racine distale au bord proximal de la plaque de couverture, et t est l'épaisseur en mètres de la plaque de couverture.

3. Procédé de commande de diminution ou d'augmentation de pression dans un joint plat, le procédé comprenant les étapes consistant à :

fournir un joint plat selon la revendication 1 ou 2 ; et
faire fonctionner le joint à des pressions différentielles de sorte que la ou chaque plaque de couverture flexible dévie axialement pour commander la largeur de l'espace axial respectif et commande ainsi la quantité de diminution ou d'augmentation de pression de la garniture

d'étanchéité adjacente.

Figure 1

Figure 2

8

Figure 3

Figure 4

(a)

134

135

135'

132

(b)

134

135

135'

132

(c)

134

135

135'

132

Figure 5

(a)

134

135

135'

132

(b)

(c)

(d)

Figure 6

(a)

(b)

(c)

Figure 7

(a)

(b)

135

132

135

132

(c)

(d)

135

132

135

132

(e)

135

132

Figure 8

**EP 2 626 603 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030068224 A
- US 20080265514 A
- EP 1231416 A

### Non-patent literature cited in the description

- **H. NAKANE et al.** The Development of High-Performance Leaf Seals. *Trans. ASME,* April 2004, vol. 126, 342-350
- **G FRANCESCHINI et al.** Improved Understanding of Blow-down in Filament Seals. *Journal of Turbomachinery,* October 2010, vol. 132 (4), 041004